## Europäisches Patentamt
## European Patent Office
## Office européen des brevets

(19)

(11) Veröffentlichungsnummer: **0 032 723**
**B1**

(12)

# EUROPÄISCHE PATENTSCHRIFT

(45) Veröffentlichungstag der Patentschrift:
**11.07.84**

(51) Int. Cl.³: **A 47 K 1/09**, A 47 K 10/10

(21) Anmeldenummer: **81100255.9**

(22) Anmeldetag: **15.01.81**

(54) **Wandhalter und Sockel dafür.**

(30) Priorität: **15.01.80 DE 3001281**

(43) Veröffentlichungstag der Anmeldung:
**29.07.81 Patentblatt 81/30**

(45) Bekanntmachung des Hinweises auf die Patenterteilung:
**11.07.84 Patentblatt 84/28**

(84) Benannte Vertragsstaaten:
**BE DE FR GB IT NL**

(56) Entgegenhaltungen:
**CH - A - 496 902**
**DE - A - 2 460 382**
**DE - C - 596 543**
**FR - A - 994 776**
**FR - A - 1 209 949**
**FR - A - 2 026 850**

(73) Patentinhaber: **Wilke, Rudolf, Marsberger Strasse 2,**
**D-3548 Arolsen (DE)**

(72) Erfinder: **Wilke, Rudolf, Marsberger Strasse 2,**
**D-3548 Arolsen (DE)**

(74) Vertreter: **Dipl.-Phys.Dr. Manitz Dipl.-Ing. Finsterwald**
**Dipl.-Ing. Grämkow Dipl.-Chem.Dr. Heyn**
**Dipl.-Phys.Rotermund Morgan B.Sc.(Phys.),**
**Robert-Koch-Strasse 1, D-8000 München 22 (DE)**

## Beschreibung

Die Erfindung betrifft einen Wandhalter aus einem, insbesondere aus gespritztem Kunststoff bestehenden Halterteil, welches auf zumindest einem, an einer Wand befestigbaren Sockel, der in einem im Halterteil gebildeten Hohlraum passt, aufsteckbar ist.

Die Halterteile derartiger Wandhalter können z.B. stangen- oder bügelförmig ausgebildet werden, und können z.B. zur Halterung von Handtüchern bzw. zur Aufnahme von Zahnbechern, Seitenschalen, gläsernen Ablageplatten oder Aschenbechern verwendet werden. Ein bügelförmiger Halter kann z.B. U-Form aufweisen und mittels zweier Sockel, die in komplementäre Hohlräume in jeweilige Enden des Bügelteiles passen, an der Wand befestigt werden. Da die in solchen Haltern einzusetzenden Gegenstände häufig genau an die Form des Bügelteils angepasst sind, um einen exakten Sitz und eine genaue Halterung des Gegenstandes im Wandhalter zu gewährleisten, kommt es darauf an, dass der Wandhalter beim Befestigen an der Wand seine durch den Herstellungvorgang bestimmte U-Form beibehält.

Es ist also eine Voraussetzung für eine einwandfreie Funktion eines derartigen Wandhalters, dass die Sockel lotrecht parallel zueinander und abstandsgenau an die Wand angeschraubt werden. Sind diese Voraussetzungen nicht erfüllt, lässt sich der Halter entweder nicht auf die Sockel aufsetzen oder wird beim Aufsetzen elastisch verformt, was zur Folge hat, dass die zu haltenden Gegenstände, z.B. ein Zahnbecher, klemmen oder durch den Halter hindurchfallen können.

Auch bei der Befestigung eines stangenförmigen Halterteiles mittels eines Sockels an einer Wand muss dafür gesorgt werden, dass der Sockel lotrecht und gegenüber anderen Gegenständen abstandsgenau an die Wand angeschraubt wird.

Es sind auch weitere Wandhalteranordnungen bekannt. So zeigt die FR-A-994 776 einen Wandhalter mit zwei Tragarmen und einem von diesen getragenen parallel zur Wand verlaufenden Rohr. Jeder Tragarm besteht aus Metall und wird auf einem fest an der Wand montierten Sockel aufgeschraubt, wobei der Sockel in einen entsprechenden Hohlraum des Tragarmes passt. Der Sockel selbst weist ein zentrales Schraubenloch auf, durch das die Befestigungsschraube passt. Bei dieser bekannten Anordnung besteht jedoch keine Möglichkeit, die Tragarme genau mit der Wand bzw. miteinander auszurichten.

Ein weiterer Wandhalter ist in der DE-C-596 543 beschrieben. Hier wird ein bügelförmiges Halterteil mittels seinen beiden drahtförmigen Enden an eine Befestigungsplatte festgenietet und die Befestigungsplatte durch eine einzige in eine mittlere Lochung derselben eingesetzte Schraube an der Wand befestigt. Damit die Befestigungsplatte zuverlässig gegen Verdrehung gesichert wird, wird eine elastische Zwischenlage zwischen der Unterseite der Platte und der Wandfläche angeordnet. Eine Ausrichtung des Halters gegenüber der Wandfläche ist jedoch nicht möglich, und eine Anpassung des Bügelteils an das einzusetzende Gefäss, z.B. eine Seifenschale, kann nur durch Verbiegung des Bügelteils erfolgen.

Das Hauptziel der Erfindung besteht somit darin, einen Wandhalter der eingangs genannten Gattung zu schaffen, mit dem ohne besonderen Aufwand der bzw. die Sockel ohne Versatz- und Ausrichtfehler auf der Wand befestigt werden kann bzw. können und mit dem bei Halterteilen, die mit mehreren Sockeln an der Wand zu befestigen sind, der richtige Abstand der Sockel stets gewährleistet werden kann, so dass nach dem Befestigen der Sockel das Halterteil ohne Schwierigkeiten auf die Sockel aufgeschoben und so endgültig an der Wand befestigt werden kann.

Zur Lösung dieser Aufgabe sieht die Erfindung vor, dass der bzw. jeder Sockel aus einem Unterteil besteht, welches ein zentrales Schraubenloch mit grösserem Durchmesser als dem der Befestigungsschraube aufweist, dessen der Wand abgewandte Stirnfläche kugelkalottenförmig ist, und aus einem mittels einer komplementär kugelkalottenförmigen Stirnfläche darauf aufgesetzten, mit dem aufgesteckten Halterteil fest verbindbaren Oberteil, welches ein zentrales Schraubenloch mit grösserem Durchmesser als dem der Befestigungsschraube und einen Aussenumriss entsprechend dem Innenumriss des Hohlraumes aufweist.

Zum Befestigen des bzw. der Sockel werden zunächst die an der Wand vorzusehenden Schraubenlöcher so genau wie möglich angekörnt. Dann werden die Schraubenlöcher gebohrt und die Sockel zunächst nur locker angeschraubt. Zur Herstellung einer genauen Abstandsbeziehung zwischen zwei Sockeln können diese dann noch im Rahmen des zwischen ihnen und den Schrauben vorgesehenen Spiels seitlich verschoben werden. Ausserdem kann das Oberteil jedes Sockels um den Mittelpunkt der Kugelkalotten noch etwas verschwenkt werden, bis es genau lotrecht zur Wand und eventuell parallel zum anderen Oberteil steht. Bei bereits angeschraubten und teilweise fixierten Sockeln kann also ohne weiteres die erforderliche Ausrichtung der Sockel ohne eine Veränderung der Lage der Befestigungsschraube herbeigeführt werden.

Nach einer ersten Ausführungsform ist die kugelkalottenförmige Stirnfläche des Unterteils konkav und die Aussenabmessungen des Unterteils sind kleiner als die Innenabmessungen des zugeordneten Hohlraumes, um dazwischen einen ringförmigen Zwischenraum zu bilden. Mit anderen Worten ist die von der Wand abgewandte Auflagefläche des Unterteils konkav gewölbt. Der Mittelpunkt der kugelkalottenförmigen Stirnfläche liegt dabei auf der Achse der Schraubenlöcher.

Eine geringere seitliche Versetzung des Unterteils beim Ausgleich von Wandunebenheiten, eine Erhöhung der Führungslänge zwischen dem Oberteil und der Halterbohrung sowie eine statisch günstigere Form für das Unterteil ermöglicht jedoch eine besonders bevorzugte Ausführungsform, bei der die von der Wand abgewandte Auflagefläche des Unterteils konvex gewölbt ist.

Besonders zweckmässig ist es, wenn das Unter- und Oberteil sowie der Hohlraum zylindrisch ausgebildet sind.

Besonders günstige Masse für das Unterteil bzw. den Zwischenraum und den Ringspalt geben die Ansprüche 5 und 6 an.

Besonders günstige Radien für die Kugelkalotte ergeben sich aus den Patentansprüchen 7 bis 9. Ein zu grosser Radius der Kugelkalotte führt zu starker seitlicher Versetzung des Sockelunterteiles, wenn Ebenheitsfehler auszugleichen sind. Ein zu grosser Kalottenradius erfordert also grosse Ringspalte bzw. verkleinert die Ausgleichsmöglichkeiten. Ein zu kleiner Radius der Kugelkalotte führt andererseits zu einer statisch nicht optimalen Beanspruchung der Sockelteile.

Um den Sockel mit dem Bügelteil zu verbinden, kann nach einer weiteren Ausführungsform vorgesehen sein, dass das Oberteil und das Bügelteil durch wenigstens ein sich im wesentlichen radial erstreckendes Verbindungteil so verbunden sind, dass das auf den Sockel aufgesetzte und an der Wand anliegende Bügelteil in von der Wand weggerichteter Axialrichtung festgelegt ist. Grundsätzlich ist die Verbindung zwischen dem Bügelteil und dem Sockeloberteil auf verschiedene Weise herstellbar, z.B. durch eine Querschraube oder durch irgendeinen Rastmechanismus.

Normalerweise ist die von der Wand abgewandte Stirnfläche des Oberteils im wesentlichen eben ausgebildet, was für übliche Anwendungen ausreicht.

Um jedoch auch grosse Fluchtfehler ausgleichen zu können, ist nach einer weiteren, besonders vorteilhaften Ausführungsform vorgesehen, dass die von der Wand abgewandte Stirnfläche des Oberteils konvex kugelkalottenförmig ausgebildet ist und dass zwischen dem Kopf der Befestigungsschraube und der zweiten kugelkalotenförmigen Stirnfläche eine Scheibe angeordnet ist, deren mit der kugelkalottenförmigen Stirnfläche in Eingriff stehende Fläche zu letzterer komplementär kugelkalottenförmig ausgebildet ist und deren Bohrung einen deutlich grösseren Durchmesser als die Befestigungsschraube und vorzugsweise den gleichen Durchmesser wie das Schraubenloch im Oberteil hat. Dabei soll der Krümmungsmittelpunkt der zweiten kugelkalottenförmigen Stirnfläche auf der Mittelachse des Schraubenloches und im Bereich der Grenzfläche zwischen dem Sockel und der Wand liegen.

Bei der vorgenannten Ausführungsform ist also auch die von der Wand abgekehrte Stirnfläche des Sockeloberteils konvex gekrümmt. Entsprechend weist die Scheibe eine dem Sockeloberteil zugewandte konkav gekrümmte Fläche auf. Die vom Sockeloberteil abgewandte Fläche der Scheibe, welche mit der Befestigungsschraube in Eingriff kommt, soll eben sein.

Von besonderem Vorteil ist es, wenn entsprechend dem Anspruch 17 dem Wandhalter eine Ausrichtlehre zugeordnet ist.

Die Erfindung wird im folgenden beispielsweise anhand der Zeichnung beschrieben; in dieser zeigt:

Fig. 1. eine teilweise geschnittene Draufsicht eines an einer Wand befestigten Wandhalters für die Aufnahme eines Zahnputzbechers,

Fig. 2 einen Teilschnitt nach Linie II-II in Fig. 1 mit in den Halter eingesetztem Zahnputzbecher,

Fig. 3 einen Schnitt nach Linie III-III in Fig. 2,

Fig. 4 eine Draufsicht des Oberteils des Sockels für den Wandhalter,

Fig. 5 einen Axialschnitt des Gegenstandes der Fig. 4,

Fig. 6 eine Ansicht des Gegenstandes der Fig. 4 von der entgegengesetzten Richtung her,

Fig. 7 eine Vorderansicht der Ausrichtlehre für die Sockel des Wandhalters nach den Fig. 1 bis 6,

Fig. 8 einen Schnitt nach Linie VIII-VIII in Fig. 7,

Fig. 9 eine Schnittansicht analog Fig. 1 ohne das Bügelteil und mit aufgesetzter Ausrichtlehre,

Fig. 10 eine Draufsicht ähnlich Fig. 1 eines Wandhalters mit eingesetzter Glasplatte, die

Fig. 11 bis 14 vergrösserte Axialschnitte eines weiteren, bevorzugten Wandhalters im Bereich des Befestigungsstelle eines Sockels an einer Wand, wobei verschiedene Fehlausrichtungen veranschaulicht sind, und

Fig. 15 einen vergrösserten Axialschnitt analog den Fig. 11 bis 14 einer weiteren vorteilhaften Ausführungsform zum Ausgleich grober Fluchtfehler.

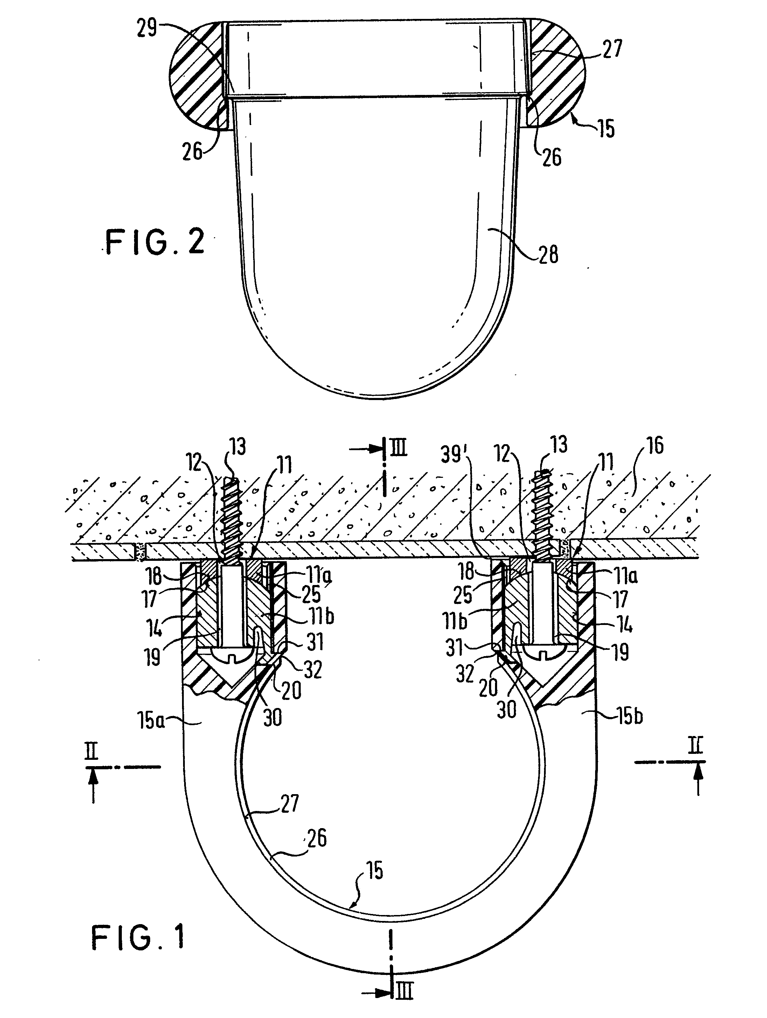

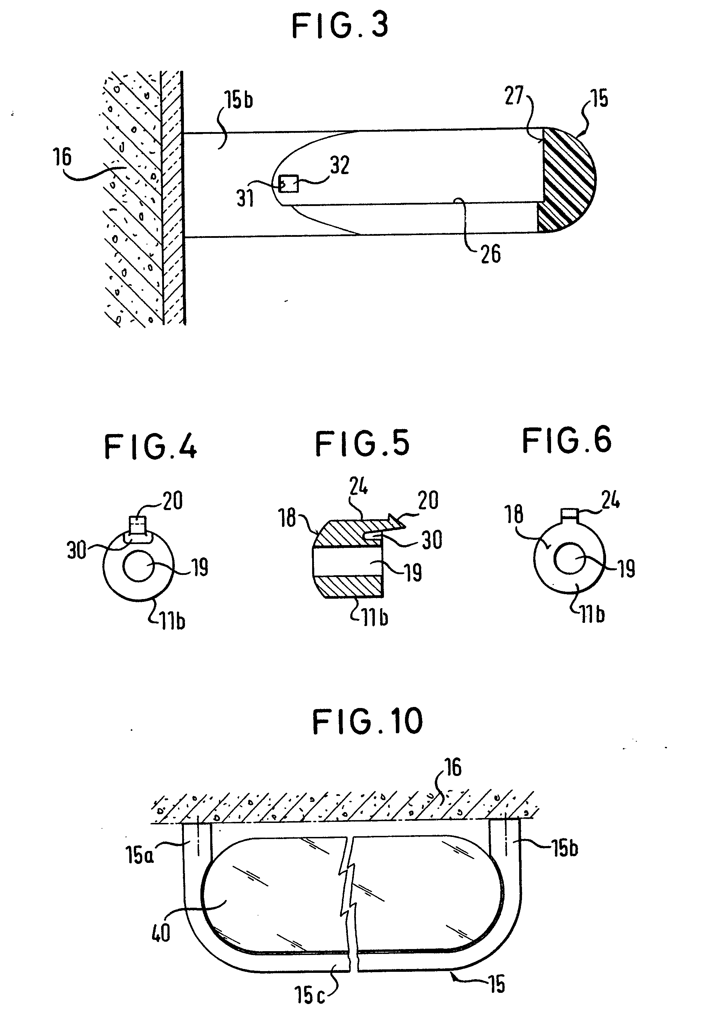

Nach den Fig. 1 bis 6 besteht der Wandhalter aus einem in der Draufsicht der Fig. 1 im wesentlichen U-förmigen Bügelteil 15, dessen beide Schenkel 15a, 15b senkrecht auf die Wand 16 zulaufen, an der der Wandhalter zu befestigen ist. An ihren der Wand 16 zugewandten Enden weisen die Schenkel 15a, 15b zylindrische Hohlräume 14 auf, welche nach Art eines Sackloches zur Wand 16 hin offen sind. Die Hohlräume 14 sind auf jeweils einen zugeordneten Sockel 11 aufgesetzt, welcher aus einem im wesentlichen scheibenförmigen Unterteil 11a und einem zylindrischen Oberteil 11b besteht, das in den Fig. 4 bis 6 im einzelnen gezeigt ist.

Sowohl das Unterteil 11a als auch das Oberteil 11b weisen axiale Schraubenlöcher 12, 19 auf, durch welche mit deutlichem radialen Spiel Schrauben 13 hindurchgeführt und in die Wand 16 eingeschraubt sind.

Nach den Fig. 1 bis 3 weist das Bügelteil 15 innen eine kreisförmige Auflage-Teilringfläche 26 auf, welche lediglich im Wandbereich über einen Winkel von etwa 90° unterbrochen ist, weil dort die Schenkel 15a, 15b einen Abstand aufweisen. Rechtwinklig zu der Auflagefläche 26 erstreckt sich nach oben eine Kreiszylinderfläche 27, welche ebenfalls im Wandbereich wie die Auflagefläche 26 unterbrochen ist.

Nach Fig. 2 kann in den Wandhalter ein Zahnputzbecher 28 mit einem oben radial vorspringenden Rand 29 eingehängt werden, wobei der Rand 29 auf der Auflagefläche 26 aufliegt. Dadurch, dass die Kreiszylinderfläche 27 sich über einen grösseren Winkel als 180° erstreckt, ist der Zahnputzbecher 28 in allen Radialrichtungen sicher gehalten.

Da die Auflagefläche 26 sehr schmal ist, kommt es darauf an, dass der Wandhalter unverformt an der Wand 16 angebracht werden kann. Um dies zu erreichen, besteht jeder Sockel 11 aus zwei Teilen 11a, 11b, von denen das Unterteil 11a zur Wand 16 hin eine ebene Stirnfläche und an der entgegengesetzten Seite eine konkave kugelkalottenförmige Stirnfläche 17 aufweist. Das axial längere Oberteil 11b besitzt an der Berührungsseite mit dem Unterteil 11a eine komplementäre konvexe Kugelkalottenfläche 18, über die es mit dem Unterteil 11a in Eingriff steht. Die entgegengesetzte Stirnfläche des Oberteils 11b ist wieder eben ausgebildet.

Jedes Oberteil 11b besitzt nach den Fig. 1 und 4 bis 6 eine sich in axialer Richtung erstreckende Radialrippe 24, deren von der Kugelkalottenfläche 18 axial abgewandtes Ende durch einen Einschnitt 30 als Schnapphaken 20 ausgebildet ist. Durch die Radialrippe 24 wird vor dem Aufsetzen des Bügelteils 15 auf die Sockel 11 eine radiale Ausrichtung der Radialrippen 24 mit einer innen an den Hohlräumen 14 vorgesehenen Axialnut 25 der Schenkel 15a, 15b des Bügelteils 15 erzwungen. An dem von der Wand 16 abgewandten Ende der Axialnuten 25 sind Anschlagstufen 31 an den Schenkeln 15a, 15b vorgesehen. An die Anschlagstufen schliessen sich nach den Fig. 1 und 3 in von der Wand 16 abgewandter Richtung rechteckförmige Öffnungen 32 an, durch die hindurch mittels eines Werkzeuges die Schnapphaken 20 zurückgedrückt werden können, um sie mit den Anschlagstufen 31 ausser Eingriff zu bringen.

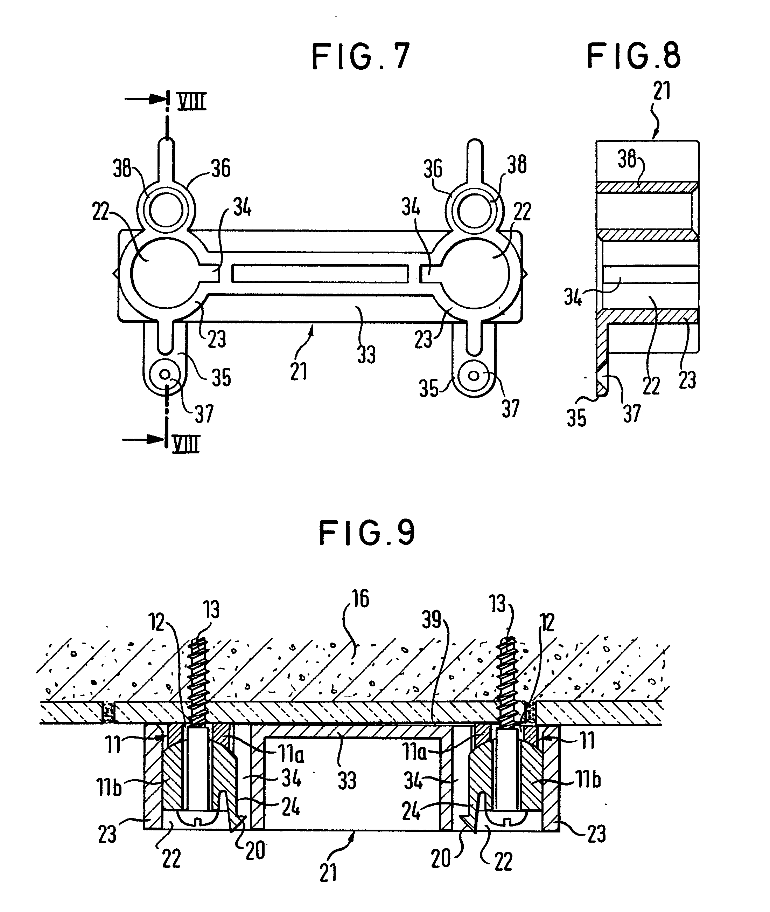

Die Fig. 7 bis 9 zeigen eine Ausrichtlehre 21, mittels der die Sockel 11 des Wandhalters so an der Wand 16 befestigt werden können, dass eine exakte Ausrichtung der Sockel 11 gegeben ist, welche ein zwangsloses Aufsetzen des Bügelteils 15 möglich macht.

Nach den Fig. 7 bis 9 besteht die Ausrichtlehre 21 aus einem Querträger 33, an dessen Enden im Abstand der Hohlräume 14 des Wandhalters nach den Fig. 1 bis 3 Führungszylinder 23 angeordnet sind, deren zylindrischer Innenraum 22 den Oberteilen 11b entsprechende Abmessungen aufweist. Die axiale Länge der Führungszylinder 23 ist so, dass bei der in Fig. 9 gezeigten Montage die Oberteil 11b vollständig in die Führungszylinder 23 hineinpassen. Auf der Innenseite weisen die Führungszylinder 23 Axialnuten 34 auf, welche in Form und Anordnungen den Axialnuten 25 des Bügelteils 15 nach den Fig. 1 bis 3 entsprechen und zur Aufnahme der Radialrippen 24 der Oberteile 11b bestimmt sind.

Oberhalb und unterhalb der Führungszylinder 23 weist die erfindungsgemässe Ausrichtlehre 21 Ösen 35 bzw. 36 auf. Die Ösen 35 bestehen aus relativ dünnem, nur kurze keilförmige Bohrungen 37 aufweisenden Material. Sie dienen zum Ankörnen bzw. Anreissen der Bohrungen für die Schrauben 13. Die beiden oberen Ösen 36 besitzen dagegen in axialer Richtung eine beträchtliche Länge aufweisende Führungszylinder 38 zum Bohren der Schraub- oder Dübellöcher für die Schrauben 13.

Die Montage des Wandhalters nach den Fig. 1 bis 6 geht nun unter Verwendung der Ausrichtlehre 21 nach den Fig. 7 bis 9 wie folgt vor sich:

Zunächst werden mittels der Ankörnlöcher 37 der Ausrichtlehre 21 die Bohrlöcher für die Schrauben 13 an der Wand 16 in der erforderlichen Höhe angezeichnet. Dann werden die Befestigungslöcher in die Wand 16 gebohrt. Stattdessen kann die Lehre 21 auch dazu benutzt werden, durch die Führungszylinder 38 hindurch die Löcher für die Bolzen 13 unmittelbar in die Wand 16 zu bohren.

Anschliessend werden ein Unterteil 11a, ein Oberteil 11b und eine Schraube 13 in der aus Fig. 9 ersichtlichen Weise zusammen in die Führungszylinder 23 eingeschoben, wobei die Rippen 24 und die Schnapphaken 20 in Ausrichtung mit den Axialnuten 34 gebracht werden.

Jetzt werden die Schrauben 13 in der aus Fig. 9 ersichtlichen Weise in die Wand 16 eingeschraubt. Hierbei behalten die Oberteile 11b aufgrund der Kugelflächenverbindung mit dem Unterteil 11a ihre im wesentlichen lotrechte Position relativ zur Wand 16 bei, und zwar selbst dann, wenn Wandunebenheiten vorhanden sind, von denen eine an dem rechten Führungszylinder 23 in Fig. 9 angedeutet ist. Aufgrund der Wandunebenheit steht das Unterteil 11a etwas schräg. Das Oberteil 11b hat jedoch gleichwohl eine fast senkrechte Anordnung relativ zur Wand 16. Die gringfügige Abweichung von der senkrechten Anordnung ist deswegen erforderlich, weil auch das später aufgesetzte Bügelteil 15 ein klein wenig schräg zur Wand steht, was durch den Zwickel 39 in Fig. 9 angedeutet ist. Bei dem später angebrachten Wandhalter liegt an der entsprechenden Stelle gemäss Fig. 1 ein kleiner Abstand 39' vor. Es handelt sich hierbei jedoch um die angesichts der Wandunebenheit optimale Befestigungsanordnung.

Nach der Befestigung der Sockel 11 wird die Ausrichtlehre 21 axial abgezogen und das Bügelteil 15 in Richtung senkrecht zur Wand auf die Sockel 11 aufgeschoben. Die Schnapphaken 20 gleiten entlang der Nuten 25 und schnappen schliesslich hinter die Anschlagstufen 31.

Es ist auch möglich, die Sockel 11 zunächst ohne Lehre lose an die Wand 16 anzuschrauben. Die Lehre 21 wird dann bei noch nicht ganz festgezogenen Schrauben 13 auf die noch beweglichen Oberteile 11b aufgesteckt, wobei diese ihre richtige Lage einnehmen. Erst dann werden die Schrauben 13 angezogen und die Lehre 21 entfernt.

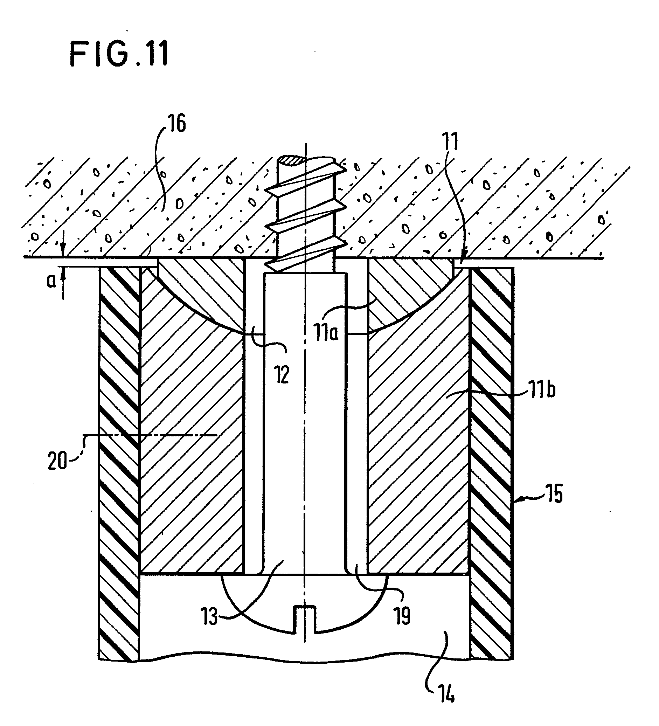

Während bei dem vorstehend beschriebenen Ausführungsbeispiel das Sockelunterteil 11a eine konkav gewölbte Auflagefläche aufweist, zeigen die Fig. 11 bis 14 eine Ausführungsform mit einem konvex gekrümmten Unterteil. Dementsprechend ist die Auflagefläche des Sockeloberteils 11b komplementär konkav ausgebildet. Die sich aus den Fig. 11 bis 14 ergebende konvexe Wölbung der von der Wand 16 abgewandten Stirnfläche des Sockelunterteils 11a hat gegenüber einer konkaven Wölbung den Vorteil, dass zum Ausgleich von Wandunebenheiten eine geringere seitliche Versetzung des Sockelunterteils ausreichend ist. Ausserdem ist die Führungslänge zwischen dem Sockeloberteil 11b und dem Bügelteil 15 erhöht. Schliesslich ist bei konvexer Krümmung die Form des Sockelunterteils 11a statisch günstiger.

Fig. 11 zeigt den Sockel 11 in einem derart an einer Wand 16 befestigten Zustand, dass keiner der vorgenannten Fehler vorliegt. Es ist wichtig, dass in diesem optimal ausgerichteten Zustand des Sockels 11 zwischen dem der Wand 16 zugewandten Ende des Bügelteils 15 bzw. des oberen Sockelteils 11b und der Oberfläche der Wand 16 ein geringfügiger Abstand a vorliegt, der zum Ausgleich von Wandunebenheiten benötigt wird.

Die axiale Befestigung der Bügelenden 15 auf den Sockeloberteilen kann durch einen Querstift oder eine Querschraube, wie in den Fig. 11-15 durch eine strichpunktierte Linie 20 angedeutet ist, oder durch einen Rastmechanismus erfolgen, wie in den Fig. 1 und 3-6 dargestellt ist. Sie kann aber auch kraftschlüssig erfolgen, z.B. durch eine Klemmschraube, einen Klemm-Mechanismus oder Klebung. Hierbei ist es im allgemeinen nicht erforderlich, den oben erwähnten Abstand a vorzugeben.

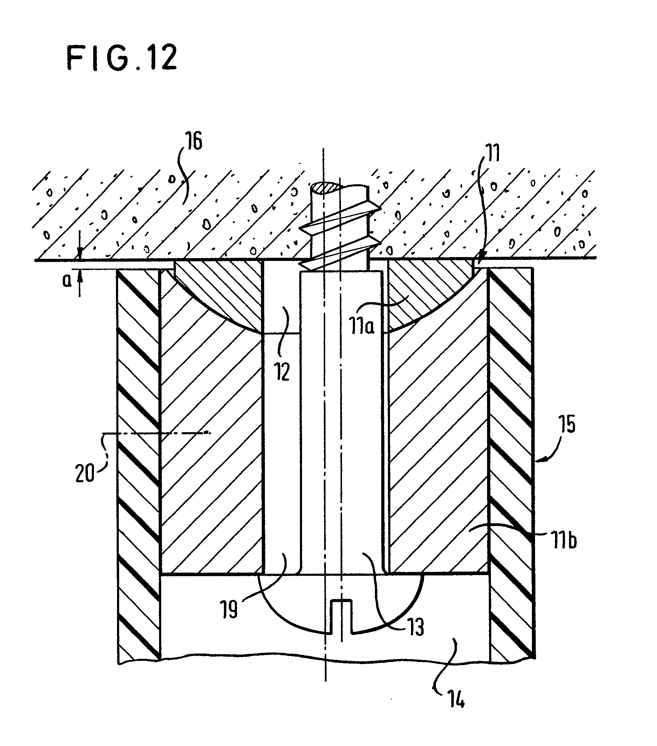

Anhand der Fig. 12 bis 14 wird deutlich, dass mittels des erfindungsgemäss aus zwei Teilen bestehenden Sockels 11 folgende Ausrichtfehler beim Anschrauben des Sockels korrigiert werden können:

a) Versatzfehler (Fig. 12) und zwar sowohl ungenauer Abstand der Schraublöcher (horizontaler Versatzfehler) als auch Abweichen der Schraublöcher von einer waagerechten Linie (vertikaler Versatzfehler);

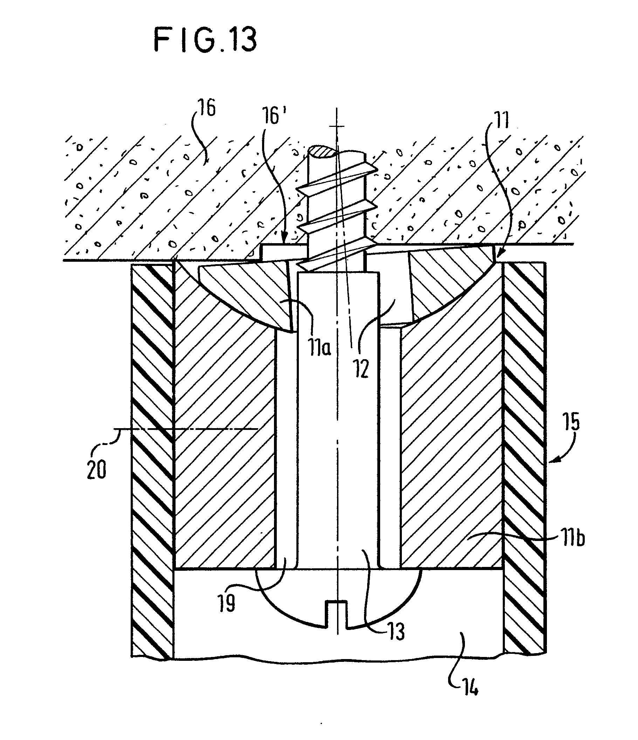

b) nicht lotrechter Verlauf der Schraublöcher zur Wand (Fluchtfehler) (Fig. 13);

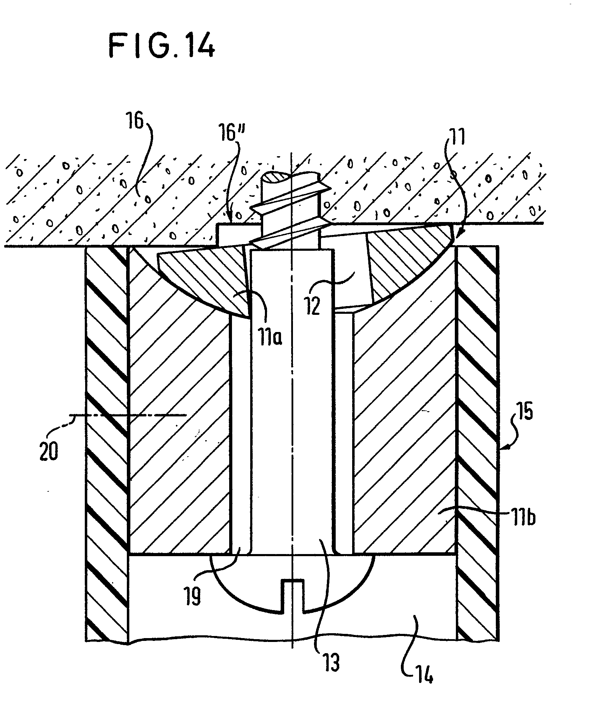

c) Unebenheiten der Wand, z.B. bei gekachelten Wänden in der Nähe einer Fuge (Fig. 14).

Fig. 12 zeigt eine zu Fig. 11 analoge Schnittansicht, wobei jedoch der Ausgleich eines Versatzfehlers veranschaulicht ist.

Die Fig. 13 und 14 zeigen, wie zwei unterschiedlich grosse Unebenheiten 16' bzw. 16'' der Wand 16 durch entsprechende Schrägstellung des Sockelunterteils 11a ausgeglichen werden können. Fig. 14 veranschaulicht dabei die maximale Unebenheit 16'', die bei den gezeigten Dimensionierungen durch die erfindungsgemässe Ausbildung gerade noch ausgeglichen werden kann.

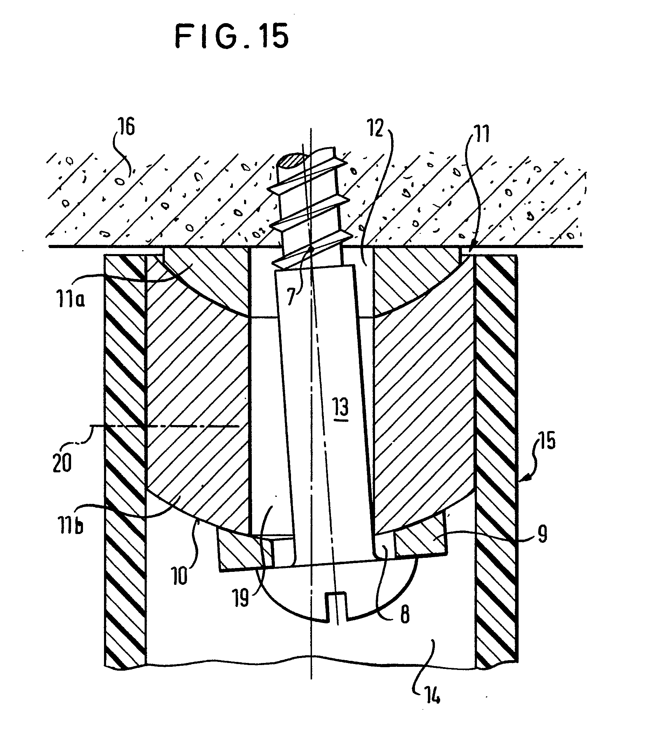

Fig. 15 zeigt in einem Schnitt analog den Fig. 11 bis 14 eine Weiterbildung, mit der selbst grobe Fluchtfehler ausgeglichen werden können.

Hier weist auch die von der Wand 16 abgekehrte Stirnfläche 10 des Sockeloberteils 11b eine konvex gekrümmte, kugelkalottenförmige Form auf.

Auf der konvexen Kugelkalotten-Stirnfläche 10 ist die dazu komplementär kugelkalottenförmige konkave Auflagefläche einer Scheibe 9 angeordnet, welche eine Bohrung 8 aufweist, deren Durchmesser wesentlich grösser als der der Befestigungsschraube 13 ist. Die von der Wand 16 abgekehrte Fläche der Scheibe 9 ist eben ausgebildet und dient als Auflagefläche für den Rand des Kopfes der Befestigungsschraube 13.

Im Interesse einer grossen Ausgleichsmöglichkeit sollte der Ringspalt um die Befestigungsschraube 13 möglichst gross sein. Andererseits dürfen die tragenden Flächen nicht zu stark verkleinert werden, damit zu hohe Flächenpressungen vermieden werden und die Bauteile ausreichend stabil bleiben.

Fig. 10 zeigt einen Wandhalter mit einem Bügelteil 15, welches in Richtung parallel zur Wand einen längeren geradlinigen Steg 15c aufweist, im übrigen aber genau so wie bei dem Ausführungsbeispiel nach den Fig. 1 bis 6 aufgebaut ist. Statt eines Zahnputzbechers 28 ist in das Bügelteil 15 nach Fig. 10 eine Glasplatte 40 eingesetzt. Die Montage des Wandhalters nach Fig. 10 erfolgt in der gleichen Weise und mit einer ähnlichen Lehre wie nach den vorangehend beschriebenen Ausführungsbeispielen.

Der Halter kann auch einfach auf die Sockel geschoben werden, ohne Befestigungsmittel anzuwenden. Dies kann z.B. bei einer Seifenschale vorteilhaft sein, da die Reinigung derselben durch die leichte Abmontierbarkeit erleichtert wird.

## Patentansprüche

1. Wandhalter aus einem, insbesondere aus gespritztem Kunststoff bestehenden Halterteil (15), welches auf zumindest einem, an einer Wand (16) befestigbaren Sockel (11), der in einem im Halterteil gebildeten Hohlraum (14) passt, aufsteckbar ist, dadurch gekennzeichnet, dass der bzw. jeder Sockel (11) aus einem Unterteil (11a) besteht, welches ein zentrales Schraubenloch (12) mit grösserem Durchmesser als dem der Befestigungsschraube (13) aufweist, dessen der Wand (16) abgewandte Stirnfläche (17) kugelkalottenförmig ist, und aus einem mittels einer komplementär kugelkalottenförmigen Stirnfläche (18) darauf aufgesetzten, mit dem aufgesteckten Halterteil (15) fest verbindbaren Oberteil (11b), welches ein zentrales Schraubenloch (19) mit grösserem Durchmesser als dem der Befestigungsschraube (13) und einen Aussenumriss entsprechend dem Innenumriss des Hohlraumes (14) aufweist.

2. Wandhalter nach Anspruch 1, dadurch gekennzeichnet, dass die kugelkalottenförmige Stirnfläche (17) des Unterteiles (11a) konkav ist und dass die Aussenabmessungen des Unterteils (11a) kleiner sind als die Innenabmessungen des zugeordneten Hohlraumes, um dazwischen einen ringförmigen Zwischenraum zu bilden.

3. Wandhalter nach Anspruch 1, dadurch gekennzeichnet, dass die kugelkalottenförmige Stirnfläche (17) des Unterteiles (11a) konvex ist.

4. Wandhalter nach einem der vorhergehenden Ansprüche, dadurch gekennzeichnet, dass das Unter- und Oberteil (11a, 11b) sowie der Hohlraum (14) zylindrisch ausgebildet sind.

5. Wandhalter nach einem der vorhergehenden Ansprüche, dadurch gekennzeichnet, dass das Unterteil (11a) in Schraubenlochrichtung 1/2 bis 1/4, insbesondere etwa 1/3 der Stärke des Oberteils (11b) hat.

6. Wandhalter nach einem der Ansprüche 3 bis 5, dadurch gekennzeichnet, dass die Breite des Zwischenraumes zwischen dem Unterteil (11a) und der Wand des Hohlraumes (14) zwischen 1/40 und 1/10 und vorzugsweise bei 1/20 des Durchmessers des Oberteils (11b) liegt, und dass die Breite des Ringspaltes zwischen der Befestigungsschraube (13) und den Bohrungen (12, 19, 8) der Sockelteile (11a, 11b, 9) zwischen 1/30 und 1/10 und vorzugsweise bei 1/15 des Durchmessers des Sockeloberteiles (11b) liegt.

7. Wandhalter nach einem der vorhergehenden Ansprüche, dadurch gekennzeichnet, dass der Radius der Kugelkalotte 1 bis 1,5 und insbesondere 1,2 bis 1,7 mal so gross wie der Radius des zylindrischen Oberteils (11b) ist.

8. Wandhalter nach einem der vorhergehenden Ansprüche, dadurch gekennzeichnet, dass der Radius der Kugelkalotte 0,5 bis 0,9, insbesondere 0,6 bis 0,8 mal so gross wie die axiale Länge des Oberteils (11b) ist.

9. Wandhalter nach einem der vorhergehenden Ansprüche, dadurch gekennzeichnet, dass der Radius der Kugelkalotte 10 bis 20 mm und insbesondere 12 bis 17 mm beträgt.

10. Wandhalter nach einem der vorhergehenden Ansprüche, dadurch gekennzeichnet, dass das Oberteil (11b) und das Halterteil (15) durch wenigstens ein sich im wesentlichen radial erstreckendes Verbindungsteil (20) so verbunden sind, dass das auf den Sockel (11) aufgesetzte und an der Wand (16) anliegende Halterteil (15) in von der Wand (16) weggerichteter Axialrichtung festgelegt ist.

11. Wandhalter nach einem der vorhergehenden Ansprüche, dadurch gekennzeichnet, dass die von der Wand (16) abgewandte Stirnfläche des Oberteils (11b) im wesentlichen eben ausgebildet ist.

12. Wandhalter nach einem der Ansprüche 1 bis 10, dadurch gekennzeichnet, dass die von der Wand (16) abgewandte Stirnfläche (10) des Oberteils (11b) konvex kugelkalottenförmig ausgebildet ist und dass zwischen dem Kopf der Befestigungsschraube (13) und der zweiten kugelkalottenförmigen Stirnfläche (10) eine Scheibe (9) angeordnet ist, deren mit der kugelkalottenförmigen Stirnfläche (10) in Eingriff stehende Fläche zu letzterer komplementär kugelkalottenförmig ausgebildet ist und deren Bohrung (8) einen deutlich grösseren Durchmesser als die Befestigungsschraube (13) und vorzugsweise den gleichen Durchmesser wie das Schraubenloch (19) im Oberteil (11b) hat.

13. Wandhalter nach Anspruch 12, dadurch gekennzeichnet, dass der Krümmungsmittelpunkt der zweiten kugelkalottenförmigen Stirnfläche (10) auf der Mittelachse des Schraubenloches (19) und im Bereich der Grenzfläche zwischen dem Sockel (11) und der Wand (16) liegt.

14. Wandhalter nach einem der vorhergehenden Ansprüche, dadurch gekennzeichnet, dass Befestigungsmittel, z.B. Springhaken (20) Klebemittel, Sperrstifte, Querstifte oder dergleichen zur Befestigung des Halters (15) an dem Sockel bzw. an den Sockeln vorgesehen sind.

15. Wandhalter nach einem der vorhergehenden Ansprüche, dadurch gekennzeichnet, dass die Materialien der aneinanderstossenden Sockelteile (11a, 11b, 9) von unterschiedlicher Härte sind und dass zumindest eine der in Kontakt miteinander kommenden Stirnflächen aufgerauht bzw. mit in der benachbarten Stirnfläche eingreifenden Vorsprüngen oder Prägungen vesehen ist.

16. Wandhalter nach einem der vorhergehenden Ansprüche, dadurch gekennzeichnet, dass eine an dem Oberteil (11b) vorgesehene Rippe (24), die vorzugsweise in dem Springhaken (20) endet, mit einer im Bügel- bzw. Halterteil (15) vorgesehenen Nut zusammenwirkt, um die Winkelstellung der beiden Teile (11, 15) zueinander festzulegen.

17. Wandhalter nach einem der vorhergehenden Ansprüche, dadurch gekennzeichnet, dass ihm eine Ausrichtlehre (21) zugeordnet ist, welche im Sollabstand der Enden des Bügelteils (15) zwei Führungszylinder (23) für die Oberteile (11b) aufweist und vorzugsweise auch noch zwei Ankörnlöcher (37) und/oder zwei Führungszylinder (38) für Bohrer in geeignetem Abstand aufweist.

## Claims

1. A wall-mountable holder comprising a holder part (15), in particular of moulded synthetic material, which can be pushed onto at least one pedestal (11) which can be secured to a wall (16) and which fits into a hollow cavity (14) formed in the holder part, characterised in that the or each pedestal (11) consists of a lower part (11a) which has a central screw hole (12) with a larger diameter than that of the securing screw (13), and the end face (17) of which remote from the wall is of spherical shape; and an upper part (11b) which is mounted on the lower part by means of a complementary spherical endface (18), which can be fixedly connected with the mounted holder part (15), and which has a central screw hole (19) with a larger diameter than that of the securing screw (13) and an external profile which corresponds to the internal profile of the hollow cavity (14).

2. A wall-mountable holder in accordance with claim 1, characterised in that the spherical endface (17) of the lower part (11a) is concave; and in that the external dimensions of the lower part (11a) are smaller than the internal dimensions of the associated cavity in order to form a ring-like intermediate space therebetween.

3. A wall-mountable holder in accordance with claim 1, characterised in that the spherical endface (17) of the lower part (11a) is convex.

4. A wall-mountable holder in accordance with one of the preceding claims, characterised in that the lower and upper parts (11a, 11b) and also the hollow cavity (14) are of cylindrical shape.

5. A wall-mountable holder in accordance with one of the preceding claims, characterised in that the lower part (11a) has a thickness in the direction of the screw hole which amounts to 1/2 to 1/4, and in particular to approximately 1/3 of the thickness of the upper part (11b).

6. A wall-mountable holder in accordance with one of the claims 3 to 5, characterised in that the width of the intermediate space between the lower part (11a) and the wall of the hollow cavity (14) lies between 1/40 and 1/10 and preferably amounts to 1/20 of the diameter of the upper part (11b); and in that the width of the annular gap between the securing screw (13) and the bores (12, 19, 8) of the pedestal parts (11a, 11b, 9) lies between 1/30 and 1/10 and preferably amounts to 1/15 of the diameter of the upper part (11b) of the pedestal.

7. A wall-mountable holder in accordance with one of the preceding claims, characterised in that the radius of the spherical surface is 1 to 1.5 and in particular 1.2 to 1.7 times as large as the radius of the cylindrical upper part (11b).

8. A wall-mountable holder in accordance with one of the preceding claims, characterised in that the radius of the spherical surface is 0.5 to 0.9, and in particular from 0.6 to 0.8 times as large as the axial length of the upper part (11b).

9. A wall-mountable holder in accordance with one of the preceding claims, characterised in that the radius of the spherical surface amounts to 10 to 20 mm and in particular to 12 to 17 mm.

10. A wall-mountable holder in accordance with one of the preceding claims, characterised in that the upper part (11b) and the holder part (15) are so connected by at least one radially extending part (20) that the holder part (15), when mounted on the pedestal (11) and contacting the wall (16), is secured in the axial direction away from the wall (16).

11. A wall-mountable holder in accordance with one of the preceding claims, characterised in that the endface of the upper part (11b) remote from the wall (16) is substantially flat.

12. A wall-mountable holder in accordance with one of the claims 1 to 10, characterised in that the endface (10) remote from the wall (16) of the upper part (11b) is of convex spherical shape; and in that a washer (9) is arranged between the head of the securing screw (13) and the second spherical endface (10), with the endface of the washer which engages with the spherical endface (10) being of complementary spherical shape to the latter and with the bore (8) of the washer having a substantially larger diameter than the securing screw (13) and preferably the same diameter as the screw hole (19) in the upper part (11b).

13. A wall-mountable holder in accordance with claim 12, characterised in that the centre of curvature of the second spherical endface (10) lies on the central axis of the screw hole (19) and in the region of the boundary surface between the pedestal (11) and the wall (16).

14. A wall-mountable holder in accordance with one of the preceding claims, characterised in that securing means, for example spring hooks (20), adhesive locking pins, transverse pins or the like are provided to secure the holder (15) to the pedestal or pedestals.

15. A wall-mountable holder in accordance with one of the preceding claims, characterised in that the materials of the abutting pedestal parts (11a, 11b, 9) are of differential hardness; and in that at least one of the endfaces which come into contact with one another is roughened or provided with projections or embossed features which engage in the endface.

16. A wall-mountable holder in accordance with one of the preceding claims, characterised in that a rib (24), which is provided on the upper part (11b) and which preferably terminates in a spring hook (20), cooperates with a groove provided in the hoop or holder part (15) in order to determine the angular position of the two parts (11, 15) relative to one another.

17. A wall-mountable holder in accordance with one of the preceding claims, characterised in that an alignment jig (21) is associated therewith, the alignment jig having two guide cylinders (23) spaced apart at the desired distance of the ends of hoop part (15) for receiving the upper parts (11b), and preferably also two centre punch holes (37) and/or two guide cylinders (38) for drills at a suitable spacing.

**Revendications**

1. Support mural constitué par une partie de support (15) faite en particulier de matière synthétique, qui peut être enfichée sur au moins un socle (11) pouvant être fixé à un mur (16), qui s'adapte dans un espace libre (14) formé dans la partie de support, caractérisé en ce que le ou chaque socle (11) est constitué par une partie inférieure (11a) qui présente un trou de vis central (12) de plus grand diamètre que celui de la vis de fixation (13), dont la surface frontale (17) opposée au mur (16) est en forme de calotte sphérique, et par une partie supérieure (11b) pouvant y être apposée à l'aide d'une surface frontale (18) en forme de calotte sphérique complémentaire, pouvant être reliée rigidement à la partie de support (15) enfichée, partie supérieure qui présente un trou de vis central (19) de plus grand diamètre que celui de la vis de fixation (13) et une périphérie externe correspondant à la périphérie interne de l'espace libre (14).

2. Support mural suivant la revendication 1, caractérisé en ce que la surface frontale (17) en forme de calotte sphérique de la partie inférieure (11a) est concave et en ce que les dimensions extérieures de la partie inférieure (11a) sont plus petites que les dimensions internes de l'espace libre associé, pour former entre eux un espace intermédiaire de forme annulaire.

3. Support mural suivant la revendication 1, caractérisé en ce que la surface frontale en forme de calotte sphérique (17) de la partie inférieure (11a) est convexe.

4. Support mural suivant l'une des revendications préécédentes, caractérisé en ce que les parties inférieure et supérieure (11a, 11b) ainsi que l'espace libre (14) sont de configuration cylindrique.

5. Support mural suivant l'une des revendications précédentes, caractérisé en ce que la partie inférieure (11a) possède dans la direction du trou de vis, 1/2 à 1/4, en particulier environ 1/3 de l'épaisseur de la partie supérieure (11b).

6. Support mural suivant l'une des revendications 3 à 5, caractérisé en ce que la largeur de l'espace intermédiaire entre la partie inférieure (11a) et la paroi de l'espace libre (14) se situe entre 1/40 et 1/10 et de préférence à 1/20 du diamètre de la partie supérieure (11b), et en ce que la largeur de l'intervalle annulaire entre la vis de fixation (13) et les alésages (12, 19, 8) de la partie de socle (11a, 11b, 9) se situe entre 1/30 et 1/10 et de préférence à 1/15 du diamètre de la partie supérieure (11b) du socle.

7. Support mural suivant l'une des revendications précédentes, caractérisé en ce que le rayon de la calotte sphérique est de 1 à 1,5 et en particulier de 1,2 à 1,7 fois le rayon de la partie supérieure cylindrique (11b).

8. Support mural suivant l'une des revendications précédentes, caractérisé en ce que le rayon de la calotte sphérique est 0,5 à 0,9, en particulier de 0,6 à 0,8 fois la longueur axiale de la partie supérieure (11b).

9. Support mural suivant l'une des revendications précédentes, caractérisé en ce que le rayon de la calotte sphérique atteint 10 à 20 mm et en particulier 12 à 17 mm.

10. Support mural suivant l'une des revendications précédentes, caractérisé en ce que la partie supérieure (11b) et la partie de support (15) sont reliées par au moins une pièce de liaison (20) s'étendant essentiellement radialement, de telle sorte que la partie de support (15) posée sur le socle (11) et s'appli-

**0 032 723**

quant contre le mur (16) est immobilisée dans la direction axiale s'écartant du mur (16).

11. Support mural suivant l'une des revendications précédentes, caractérisé en ce que la surface frontale opposée au mur (16) de la partie supérieure (11b) est de réalisation essentiellement plane.

12. Support mural suivant l'une des revendications 1 à 10, caractérisé en ce que la surface frontale (10) opposée au mur (16) de la partie supérieure (11b) est réalisée en forme de calotte sphérique convexe, et en ce qu'entre la tête de la vis de fixation (13) et la seconde surface frontale (10) en forme de calotte sphérique est disposée une rondelle (9), dont la surface engageant la surface frontale (10) en forme de calotte sphérique est réalisée avec une forme de calotte sphérique complémentaire de cette dernière, et dont l'alésage (8) possède un nettement plus grand diamètre que la vis de fixation (13) et de préférence le même diamètre que le trou de vis (19) dans la partie supérieure (11b).

13. Support mural suivant la revendication 12, caractérisé en ce que le centre de courbure de la seconde surface frontale (10) en forme de calotte sphérique se situe sur l'axe médian du trou de vis (19) et au voisinage de la surface de délimitation entre le socle (11) et le mur (16).

14. Support mural suivant l'une des revendications précédentes, caractérisé en ce que des moyens de fixation, tels que des crochets à ressort (20), un adhésif, des goupilles de blocage, des goupilles transversales ou analogues sont prévus pour la fixation du support (15) sur le ou les socles.

15. Support mural suivant l'une des revendications précédentes, caractérisé en ce que les matériaux des parties de socle se rencontrant mutuellement (11a, 11b, 9) ont des duretés différentes, et en ce qu'au moins l'une des surfaces frontales entrant en contact mutuel est rendue rugueuse ou est dotée de saillies ou d'empreintes s'engageant dans la surface frontale adjacente.

16. Support mural suivant l'une des revendications précédentes, caractérisé en ce qu'une nervure (24) prévue sur la partie supérieure (11b), qui se termine de préférence dans le crochet à ressort (20), coopère avec une rainure prévue dans la partie d'étrier ou de support (15), afin de fixer la position angulaire des deux parties (11, 15) entre elles.

17. Support mural suivant l'une des revendications précédentes, caractérisé en ce qu'un gabarit d'alignment (21) lui est associé, gabarit qui présente à l'écartement nominal des extrémités de la partie d'étrier (15), deux cylindres de guidage (23) pour la partie supérieure (11b) et de préférence encore aussi deux trous de marquage (37) et/ou deux cylindres de guidage (38) pour des forets, à un écartement approprié.

FIG. 2

FIG. 1

0 032 723

# FIG.3

# FIG.4    FIG.5    FIG.6

# FIG.10

11

# FIG.7

# FIG.8

# FIG.9

# FIG.11

# FIG.12

FIG.13

# FIG.14

# FIG.15